Europäisches Patentamt

European Patent Office

Office européen des brevets

(11) Publication number: **0 301 736 B1**

## EUROPEAN PATENT SPECIFICATION

(45) Date of publication of patent specification: **30.03.94** (51) Int. Cl.⁵: **G05B 19/04**

(21) Application number: **88306519.5**

(22) Date of filing: **15.07.88**

(54) **Input-output device.**

(30) Priority: **15.07.87 CA 542242**

(43) Date of publication of application:
**01.02.89 Bulletin 89/05**

(45) Publication of the grant of the patent:
**30.03.94 Bulletin 94/13**

(84) Designated Contracting States:
**CH DE FR GB LI SE**

(56) References cited:
**EP-A- 0 198 673**
**US-A- 4 172 289**
**US-A- 4 517 637**

(73) Proprietor: **DISTRIBUTED MATRIX CONTROLS INC.**
**1245 Martingrove Road**
**Rexdale Ontario M9W 4X2(CA)**

(72) Inventor: **McLeish, Anthony Barrington**
**1406-3590 Kaneff Crescent**
**Mississanga Ontario, L5A 3X3(CA)**
Inventor: **Hill, Anthony**
**18203 Yonge Street**
**Holland Landing Ontario, L0G 1H0(CA)**
Inventor: **Darling, Jim**
**181 Burgundy Drive**
**Oakville Ontario, N6J 4E9(CA)**
Inventor: **Dean, David Michael Moore**
**1090 Falgarwood Drive**
**Oakville Ontario, L6H 1N9(CA)**

(74) Representative: **Butler, Michael John et al**
**FRANK B. DEHN & CO.**
**Imperial House**
**15-19 Kingsway**
**London, WC2B 6UZ (GB)**

EP 0 301 736 B1

## Description

This invention relates to an input-output device, and particularly relates to a universal input-output device utilizing common electronic circuitry repeatedly for a variety of input and output signals for controlling and monitoring same through the use of software.

Various kinds of machines and processes have heretofore been utilized to control or monitor machines, signals or devices.

For example, United States Patent No. 4,607,333 relates to electronic beam exposure apparatus which is controlled by a program which stores the desired circuit pattern, and the data of the computer is supplied to an electrostatic deflector via a digital control circuit, digital to analogue convertors and amplifiers as a voltage which is proportional to the degree of deflection.

Moreover, United Stated Patent No. 3,573,442 teaches a computer of the sample data type for performing, selecting, computing and combining functions and comprises a single time shared or multiplexed operational amplifier adapted to add and subtract analogue signal quantities, through a plurality of input signals and to store the results to a plurality of output switches on memory devices such as capacitors, which results are culled out at proper times as analogue outputs and/or feedback signals.

Furthermore, United States Patent No. 3,548,170 relates to a signal digital computer which takes over functions of all analogue controllers as a process whereby signals from the sensing elements feed into an input multiplexer so that the computer can scan them one at a time, such signals being converted to digital signals having discrete values before entering the computer. The output signals from the computer may be converted to analogue signals or remain digital. U.S. Patent No. 3548,170 utilizes individual circuits having different electronic components for input and for output, analogue and digital signals. European Patent Application EP-A-0,198,673 discloses a video random access memory with an input-output circuit. U.S. Patent No. 4,517,637 (discussed below) discloses a programmable measurement and control device.

Finally, United States Patent No. 4,404,625 discloses a programmable logic controller provided with a central control unit consisting of a microcomputer and firmware and an input circuit adapted to act as an input interface between the external switches connected to input terminals and the central control unit, and output circuitry controlling external equipment connected to the output terminals in response to the output signal from the central control unit, a program memory for storing the sequence programs set by users as desired, a key input device to be used for monitoring or setting programs, and an indicator for indicating the instructions being sent at the program settings and also instructions being executed during execution of the program. More particularly the input and output circuitry of U.S. Patent No. 4,404,625 are different and establish their characteristics from discrete components rather than software controlled pulse width modulated power sources.

Each of the foregoing devices have generally been designed to execute a specific monitoring or control function.

Present digital microprocessor technology for control purposes utilizes discrete circuitry uniquely designed with specific electronic components to condition each type of input signal from sensing field equipment, and also utilizes discrete circuitry uniquely set up with specific electronic components to provide each type of output signal required for controlling the field equipment. Furthermore, inputs are handled independently of outputs in present day electronic circuitry.

Thus, from United States Patent No. 4,517,637 there is known an input-output device for sequentially sensing input signals from field devices and providing control output signals for controlling said field devices on a plurality of channels, comprising:

(a) signal conditioning circuitry connected to said field devices;

(b) a programmable memory;

(c) a microprocessor controlling the storing and accessing of data in said programmable memory;

(d) first multiplexer means connected to said microprocessor.

The present invention is characterised in that

(e) said programmable memory configures said input-output device by storing data defining:

    (i) each said field device connected to said signal conditioning circuitry;

    (ii) one of said channels as providing an input signal to said signal conditioning circuitry from one of said field devices;

    (iii) one of said channels as providing an output signal from said input-output device to one of said field devices for controlling said field device in response to an input signal;

(f) said first multiplexer means, in response to control signals from said microprocessor, selectively transmits said data stored in said programmable memory corresponding to said input signal or said output signal to a bit stream generator;

2

(g) said bit stream generator is connected to said first multiplexer means and in response to said selected data from said first multiplexer means generates a selected digital bit stream corresponding to said data representing said input signal or said output signal;

(h) means is provided for translating said digital bit stream to an analogue signal for a sequentially selected input signal or output signal;

(i) said signal conditioning circuitry is activated by said analogue signal to sense said input signal or provide said output signal,

(j) whereby said input-output device is programmed by varying the data stored in said programmable memory without changing said signal condition circuitry so that input signals from said field devices on different channels may be monitored by said signal conditioning circuitry, or output signals to said field devices may be provided on different channels by said signal conditioning circuitry.

In a preferred embodiment said programmable memory means is controlled by said microprocessor means for storing data in said programmable memory means and said data defines: each said field device connected to said signal conditioning circuitry means; one of said channels as an input signal to said input-output device; one of said channels is an output signal from said input-output device to said one of said field device for controlling said one said field device in response to said input signal; said first multiplexer means selectively transmits said data stored in said programmable memory means corresponding to each said input signals and said output signals on each one of said channels; said video RAM means is connected to said first multiplexer means and in response to said selected data from said multiplexer means sequentially generates a digital bit stream corresponding to said data representing each said input signal and output signal; said signal circuitry conditioning means is activated by each said analogue signal for sequentially: sensing each said selected input signal from said field devices on said selected channel, and providing each said selected output signal to said field devices for controlling said field devices on said selected channel, for each signal selected by said first multiplexer means from said channels whereby said input-output device may be programmed so that different input signals are monitored and different output signals are provided by said signal conditioning circuitry means on each said channel by varying said data stored in said programmable memory means without changing said signal conditioning circuitry means; said device further includes: programmable gain amplifier means coupled with said signal conditioning circuitry means for amplifying said analogue signals sensed by said signal conditioning circuitry means within a preselected range; digital to analogue converter means for converting a digital signal from said microprocessing means to an analogue signal; comparator means for comparing said amplified analogue signal from said programmable gain amplifier means with said analogue signal from said digital to analogue converter.

It is an object of this invention to produce an improved input-output device which utilizes a common set of electronic circuitry repeatedly for a variety of input or output signals.

An embodiment of the invention will now be described by way of example only, with reference to the accompanying drawings in which:

Figure 1 is a schematic view of the input-output device;

Figure 2 is a configuration diagram illustrating a subsystem of input-output devices connected to main processing units;

Figure 3 is a representative schematic diagram of the signal conditioning circuitry for one channel;

Figure 4 is a schematic diagram of an analogue input;

Figure 5 is a schematic diagram of an analogue current input.

Figure 6 is a schematic diagram of a digital input.

Figure 7 is a diagram of a pulse width modulated output signal.

Identical parts have been given identical numbers throughout the figures.

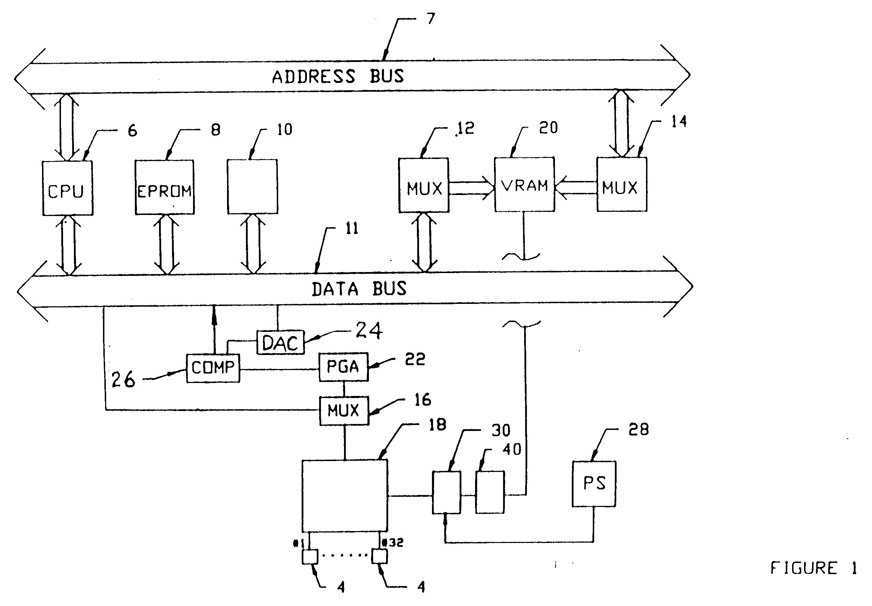

Figure 1 discloses generally the input-output device 2 which is adapted to be connected by suitable wiring (not shown) to field devices 4. For example, field device 4 may comprise either a resistance temperature detector, thermister, thermocouple, or voltage or current reading sensor.

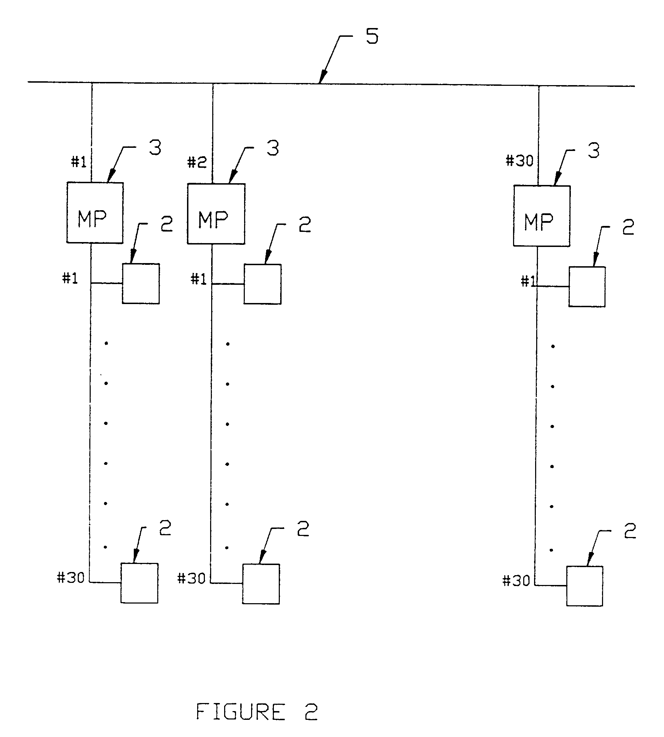

Figure 2 is a diagram which illustrates the configuration utilized in the embodiment described herein, where thirty input-output devices 2 (IOP number) in a subnetwork may be controlled by a main processing unit or MP 3, and up to thirty main processing units (MP number) or MP 3 may be connected by a Backbone Local Area Network (Lan) 5. Each MP 3 controls up to thirty input-output devices 2. Although figure 2 illustrates thirty MP 3, and thirty input-output devices 2, any number of MP 3, or input-output devices 2 may be utilized without departing from the scope of this invention.

Each MP 3 is adapted to initiate a command which is carried out by central processing unit 6 of input-output device 2.

The input-output device 2 is adapted to condition or monitor input signals from field devices 4 and provide for output signals required for controlling the field device 4 on the same or another channel in a manner to be more fully particularized herein.

The invention to be described herein is adapted to accomodate 32 field signals on 32 channels, although the input-output device 2 can be modified to accomodate any number of channels without departing from the scope of the invention to be described herein.

The input-output device 2 includes a central processing unit 6, EPROM or memory 8, a serial communication controller or keyboard 10, multiplexers 12, 14, 16, signal conditioning circuitry 18, programmable gain amplifier (PGA) 22, digital to analogue converter (DAC) 24, comparator 26, power source 28, and voltage level shifters 30. The input-output device 2 also includes means 20 for generating a digital bit stream to activate the signal conditioning circuitry in a manner to be more fully particularized herein. The preferred embodiment herein describes a video RAM (VRAM) 20 to accomplish the generation of said bit stream although shift registers or counters could also be utilized.

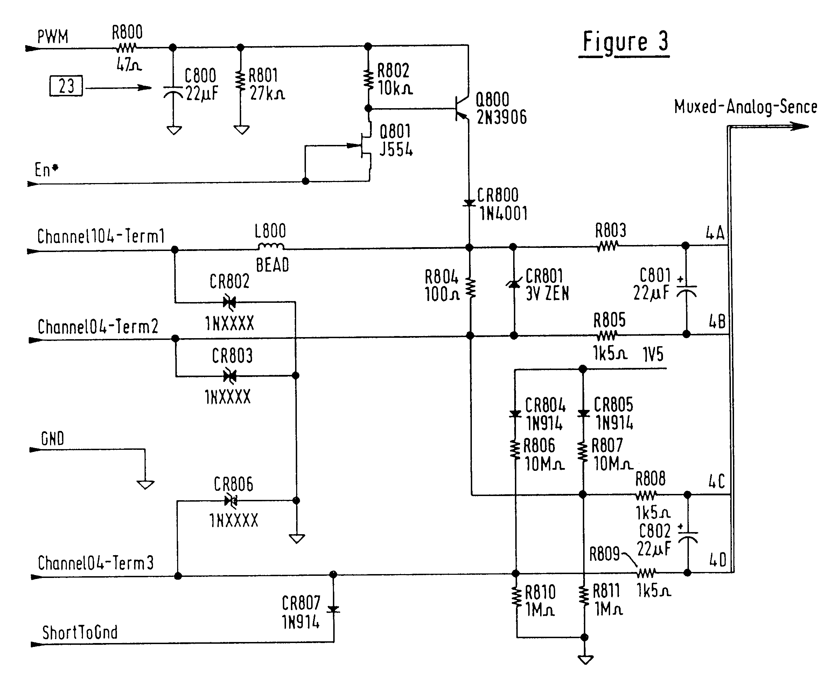

Figure 3 is a representative schematic diagram of the signal conditioning circuitry for one channel identified as channel 104. The signal conditioning circuitry 18 of the invention herein utilizes thirty-two channels, although the signal conditioning circuitry may be adapted to accomodate any number of channels without departing from the scope of this invention.

A field device 4 is connected to a channel. Each channel includes 4 terminals, TERM 1, TERM 2, TERM 3, and a ground so as to enable a user to connect any one of the following signal inputs or outputs from a transducer or field device 4:

### ANALOGUE INPUTS

eg.- Voltage 0-10 VDC
 - Current 4-20 ma
 - Resistance Temperature Detector
 - Thermocouple, Types J, K and T
 - Thermister

### DIGITAL INPUTS

eg.- On Off Status

### PULSE INPUTS

eg. - 0-10 Hz.

### ANALOGUE OUTPUTS

eg.- Voltage 0-10 VDC
 - Current 4-20 ma
 - Pulse Width Modulated
 Signal

### DIGITAL OUTPUTS

eg.- On Off Status

The signal conditioning circuitry 18 comprises analogue circuitry which is utilized to:
(a) filter noise;
(b) provide electrical protection from electromagnetic interference (EMI);
(c) provide common mode voltage noise suppression;
(d) sense the input and outputs referred to above.

The CPU 6 utilizes a software program with predefined parameters to be selected and stored in memory 8 by means of keyboard 10.

EPROM 8 has embedded therein a fixed software program (firmware) for configuring the input-output device 2 and shall be described herein. In order for the user to define what type of field device or transducer 4 is wired to each channel the user must define or configure the system using embedded software in EPROM 8. More particularly the input-output device 2 may be activiated by keyboard 10 to present the configuration menu program which is stored in memory 8 thus allowing the user to configure and define the input/output parameters for each channel to be controlled or monitored by the input-output device 2.

VRAM 20 is adapted to generate a bit serial pulse stream between zero and 4,096 bits of information for each channel at a rate of 24 Mhz and also includes configuration memory for storing the configured parameters in the conventional RAM section of VRAM 20. The input-output device 2 can also be adapted to operate at a clock frequency other than 24 Mhz. The keyboard 10 is utilized to configure the RAM section of VRAM 20 as well as provide status information.

Although the preferred embodiment disclosed herein utilizes VRAM 20 to generate said pulse stream, shift registers or counters could also be used in the place of VRAM 20 provided the components were organized as 32 by 4,096 bit shift registers. In other words the components would be organized to generate a bit serial pulse stream between zero and 4,096 bits of information on 32 channels. If VRAM 20 is replaced with shift registers it is still necessary to utilize a RAM for storing the configured parameters. Although the preferred embodiment herein describes the use of a bit stream between zero and 4,096 bits, any number below or higher than 4,096 could be utilized.

The input-output device 2 described herein may be programmed to monitor or control any analogue, digital or pulse input or output signals from the field devices 4 referred to above.

In order to define the type of field device or transducer 4 which is wired to the terminals of each channel so as to configure a particular channel, the user of the input-output device 2 will activate the keyboard 10 so as to present the "Point Configuration" option from the system menu from EPROM 8. For example, the system menu sequentially takes the user through the following type of questions and answers:

1. Point Name - the user defines the name of the point. For example the user may define the temperature of a particular room.

2. Point Type - the user defines whether the point is an analogue input, analogue output, digital input or digital output.

3. Define the MP Number (define the particular main processing unit referred to in figure 2).

4. Define IOP Number (define the particular input-output device 2 described in figure 2).

5. Define channel number (there are up to thirty-two channels for each input output device 2) on which the field device or transducer 4 is wired to the signal conditioning circuitry 18.

6. Define the sensor type - the user selects one of the following:
- resistance temperature detector
- thermocouple
- thermister
- voltage
- current

If the user has selected an analogue input, a submenu requests the user to select items such as:

(a) a base - lowest valid value

(b) span - maximum valid value

Furthermore the user will also define a linerization, compensation and conversion to engineering units in accordance with procedures well known to those persons skilled in the art. Alarm limits are also set so that an alarm may visually appear on a screen in the event that a reading appears at a preselected value between the base and the span.

If the user selects an analogue ouput a submenu requests the user to select such things as:

(a) top scale

(b) bottom scale

as well as define the Feed Back Point which associates the analogue output with an analogue input for purposes of controlling to a desired result.

If the user selects a digital input, a submenu requests the user to define the Activation Mode more or less as:

(a) normally open

(b) normally closed

If the user selects a digital output a submenu requests the user to define the Activation Mode more or less as:

(a) normally open

(b) normally closed

(c) momentary

(d) maintained

By following the process referred to above the user can program the input-output device 2 so as to control or monitor the type of field sensor or transducer 4 to be wired to the terminals of the channel. All thirty-two channels are programmed in this fashion. It should be noted that no changes to any hardware of the input-output device 2 or field hardware 4 is required when configuring the input-output device 2 through software embedded in EPROM 8 as described above.

For illustration purposes only, channel 1 may be programmed for an analogue output signal having a voltage of 0-10 VDC. Channel 2 may be programmmed for an analogue input signal from a Resistance Temperature Device, whereas Channel 3 may be programmed for an analogue output signal having a value between 0-10 VDC; and so on.

Means 20 for generating a bit stream such as VRAM or shift registers is adapted to generate a bit pattern of between 0-4,096 bits of information at a rate of 24 Mhz. Each channel which has been programmed in the fashion referred to above has its own method of manipulating the VRAM 20 stored in EPROM 8. More particularly, a software program resident in EPROM 8 links with the RAM portion of VRAM 20 which determines the pulse stream pattern generated by VRAM 20.

For example, if one of the channels monitors a flow transducer 4 within a range of 0 and 200 gallons per minute and a desired value of 100 gallons per minute is required, the input-output device 2 would be programmed so that the 0 - 200 gallons per minute would correspond to an analogue input into the input-output device 2 of a value of 0-10 VDC respectively. If a second channel is programmed to provide a control output signal to a final control element which modulates the flow to a desired value of 100 gallons per minute, within an output voltage range of 0-10 VDC, then the VRAM 20 would generate a pattern with 2,048 bits "on" and 2,048 bits "off" to represent the 5 VDC required on 100 gallons per minute.

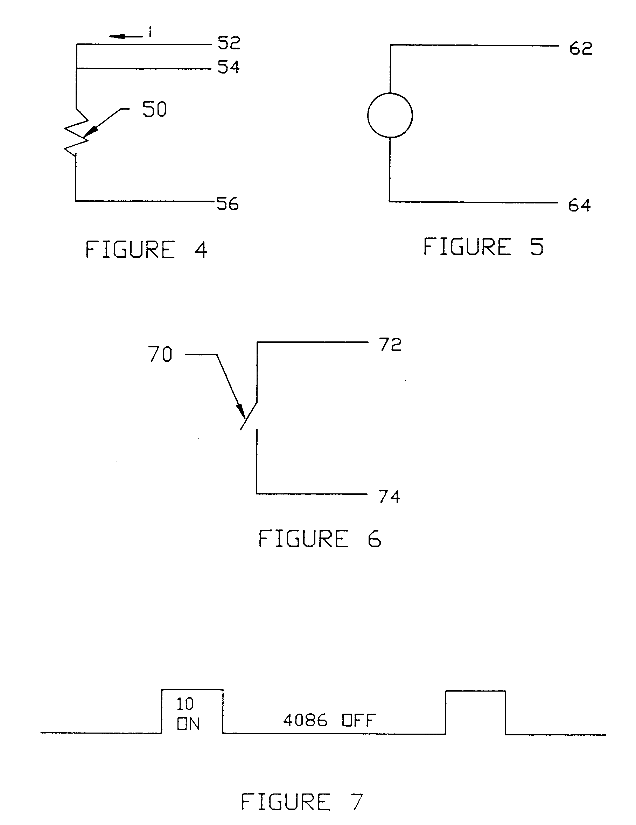

The input-output device 2 shall now be described in relation to reading a transducer of field device 4 having an analogue input into the input-output device 2 such as a Resistance Temperature Device or Thermister shown as a load resistance 50 in figure 4. The terminals 52, 54 and 56 of the load resistance 50 of Resistance Temperature Device or Thermister are connected to Term 2, Term 3 and ground of a particular channel.

The CPU 6 uses the address bus 7 and the data bus 11 to select through first multiplexer means namely multiplexers 14 and 12, the appropriate message in VRAM or shift registers 20 which corresponds to the field device 4 wired to signal conditioning circuit 18 that has been programmed in the fashion referred to earlier.

In the case of sensing an analogue input into the input-output device 2 from the Resistance Temperature Device or Thermistor 4, a small impressing current i is generated through load 50 and voltage reading taken by the input-output device 2 on the particular channel.

The small impressing current i is generated by means of VRAM or shift registers 20 which generates a relatively low bit stream such as 10 bits "on" for purposes of impressing current i.

A shift register 40 is utilized for buffering the bit stream from VRAM 20 from 24 MHz to 3 MHz. Thereafter level shifters 30 are utilized to translate the bit stream pattern to appropriate voltage levels. More particularly the level shifters 30 are connected to power supply 28. The power supply 28 has a voltage of 28 volts. The duration which the shifters 30 are "on" is determined by the duty cycle of the "bit" pattern, as the voltage storage capacitors 23 in Figure 3 will change to fractions of the 28 volt power supply, which is then applied to the conditioning circuitry 18.

In order to impress current i through the Resistance Temperature Device or Thermistor 4, the CPU 6 uses address bus 7 and data bus 11 to select through multiplexers 14 and 12 the appropriate message in VRAM 20, to generate the appropriate message in VRAM or shift registers 20 to generate the appropriate bit pattern which is then buffered through shift registers 40 and translated by voltage shifters 30 to operate the appropriate signal conditioning circuit 18 for impressing current i to the appropriate transducer of the field device 4. Thereafter a voltage output from Resistance Temperature Device or Thermistor 4 is read across load resistance 50 by means of the signal conditioning circuit 18, multiplexer 16, PGA 22, DAC 14 and comparator 26.

More particularly second multiplexer means, namely multiplexer 16 selects the voltage output eminating from resistance load 50 on the same channel and such signal is manipulated by PGA 22 so as to provide a signal gain as necessary in order to amplify the analogue voltage output to between 0 and 10 VDC. Thereafter the analogue voltage output is compared by comparator 26 to the analogue signal level of DAC 24 which is being altered by CPU 6 through address bus 7 and data bus 11 to make the analogue output of DAC 24 equal to the value eminating from PGA 22. Once the analogue output of DAC 24 equals the value eminating from PGA 22 the CPU 6 has effectively read the analogue input signal from field device 4. Instead of utilizing a DAC, a discrete analogue to digital integrated converter could also be utilized.

If the transducer 4 is a thermocouple there is no need for impressing current i and the input-output device 2 may read the analogue input from such field device 4 in accordance with the procedure described above.

The input-output device 2 shall now be described in relation to an analogue output to a transducer of the field device 4. If the value represented by the position to which CPU 6 operates DAC 24 is not the value desired by the control parameters stored in memory 8, or if the input-output device 2 is commanded by MP to change the output of a particular field device 4, then VRAM or shift registers 20 is given a change by CPU 6 through address bus 7 and data bus 11 by means of multiplexers 12 and 14.

For example, if one of the channels monitors a field device having a flow transducer with a range of 0 - 200 gallons per minute and a desired value of 100 gallons per minute is required, the configuration program would be configured with the use of an associated control algorithm previously configured so that the 0 - 200 gallons per minute would correspond to a value of 0 - 10 VDC with a voltage output of 5 VDC via transducer 4 representing the desired 100 gallon per minute flow. The VRAM or shift registers 20 generation of 2,048 bit stream would represent the desired 5 VDC output or 100 gallon per minute desired flow. If the desired flow fell below the 100 gallon per minute value, VRAM 20 would be given a change by CPU 6 through address bus 7 and data bus 11 so as to generate a bit stream of other than 2,048 bits, which stream would be buffered by shift registers 40, translated by voltage shifters 30, and conditioned by signal conditioning circuitry 18 so as to manipulate the field device 4 to correct the analogue signal output to the desired result.

Figure 5 illustrates a field device or transducer 4 for an analogue current input or output. The terminal 62 and 64 of transducer 4 are connected to Term 1 and Term 2 of a particular channel.

Figure 6 illustrates a field device or transducer 4 for a digital input on a particular channel. The field device 4 consists of a switch 70, with terminals 72 and 74 connected to Term 2 and ground respectively of signal conditioning circuitry 18.

In order to sense a digital input into input-output device 2 on a particular channel, CPU 6 selects the appropriate message in VRAM or shift registers 20 to generate a bit stream which is buffered by shift registers 40 and translated by voltage level shifters 30 so as to produce a sense voltage generally between 5 - 24 VDC which is conditioned by signal conditioning circuitry 18 prior to being applied to the digital field device 4. If the switch 70 of field device 4 is open then the sensing voltage is returned by the field device 4 to the signal conditioning circuitry 18 which represents one condition. If the switch 70 is closed a short to ground exists and the sensing voltage is not returned to the signal conditioning circuitry 18, which represents another condition.

A digital output would operate in similar fashion.

The input-output device 2 can produce pulse width modulated outputs, which are an adaption of the analogue output referred to herein. Field devices 4 such as valves, damper, motors, and pneumatic to current converters may be controlled by pulse width modulated signals. The input-output device 2 may generate a pulse width modulated signal on a particular channel by utilizing VRAM 20, voltage shifters 30 and the power supply 28. The modulation of the pulse stream from VRAM or shift registers 20 is determined by turning "On" or "Off", the pulse stream as illustrated in figure 7.

Field device 4 such as valves, damper motors, and pneumatic to current converters characteristically will respond to pulse width modulated signal differently, based on the duty cycle of the pulse width modulated signal which is defined as the ratio of "On" to "Off" bits. For example, a particular motorized damper if so designed will open a fixed percentage if the pulse width signal has a 10% duty cycle, and such damper will change position if a 25% duty cycle is applied the same.

The input-output device 2 utilizes the same analogue circuitry in the signal conditioning circuitry 18 to be connected to different types of field signals for the purpose of data acquisition into the digital microprocessor 6. By utilizing multiplexers 12, 14 and 16 thirty-two signals may be accomodated by input-output device 2.

The input-output device 2 described herein may be utilized in the following areas:
(a) supervisory control and data acquisition;
(b) building and factory automation systems;
(c) process control systems;
(d) monitoring and control systems;
(e) programmable logic control systems;
(f) data acquisition systems.

Although the preferred embodiments, as well as the operation and use have been specifically described in relation to the drawings, it should be understood that variations in the preferred embodiments could easily be achieved by a skilled man in the trade without departing from the scope of the invention as defined in the claims. Accordingly, the invention should not be understood to be limited to the exact form revealed in the drawings.

## Claims

1. An input-output device (2) for sequentially sensing input signals from field devices (4) and providing control output signals for controlling said field devices on a plurality of channels, comprising:
(a) signal conditioning circuitry (18) connected to said field devices;
(b) a programmable memory (8);
(c) a microprocessor (6) controlling the storing and accessing of data in said programmable memory;

(d) first multiplexer means (12,14) connected to said microprocessor;

characterised in that:

(e) said programmable memory (8) configures said input-output device by storing data defining:

(i) each said field device connected to said signal conditioning circuitry;

(ii) one of said channels as providing an input signal to said signal conditioning circuitry from one of said field devices;

(iii) one of said channels as providing an output signal from said input-output device (2) to one of said field devices for controlling said field device in response to an input signal;

(f) said first multiplexer means, in response to control signals from said microprocessor, selectively transmits said data stored in said programmable memory corresponding to said input signal or said output signal to a bit stream generator (20);

(g) said bit stream generator (20) is connected to said first multiplexer means and in response to said selected data from said first multiplexer means generates a selected digital bit stream corresponding to said data representing said input signal or said output signal;

(h) means (30) is provided for translating said digital bit stream to an analogue signal for a sequentially selected input signal or output signal;

(i) said signal conditioning circuitry (18) is activated by said analogue signal to sense said input signal or provide said output signal,

(j) whereby said input-output device is programmed by varying the data stored in said programmable memory without changing said signal condition circuitry so that input signals from said field devices on different channels may be monitored by said signal conditioning circuitry, or output signals to said field devices may be provided on different channels by said signal conditioning circuitry.

2. An input-output device as claimed in claim 1 wherein said bit stream generator means comprises a shift register for generating said digital bit stream between zero and 4,096 bits of information at a preselected frequency for each selected input signal and output signal.

3. An input-output device as claimed in claim 1 wherein said bit stream generator comprises a video RAM (20) for generating said digital bit stream for each selected input signal and output signal.

4. An input-output device as claimed in any preceding claim wherein said signal conditioning circuitry means (18) includes 32 channels.

5. An input-output device as claimed in claim 3 wherein said video RAM (20) generates a digital bit stream between zero and 4,096 bits of information at a preselected frequency for each sequentially selected input signal or output signal.

6. An input-output device as claimed in claim 5 wherein said programmable memory comprises:

(a) software fixed in EPROM (8) for defining said input signals or said output signals;

(b) random access memory included in said video RAM means (20) for storing said defined input signals or output signals.

7. An input-output as claimed in claim 5 wherein said programmable memory comprises:

(a) software fixed in EPROM (8) for defining said input signals or said output signals;

(b) a random access memory for storing said defined input signals or output signals said random access memory being separate from said video RAM (20).

8. An input-ouput device as claimed in claim 6 or 7 wherein said translating means comprise voltage shifters (30) associated with a power source (28) for generating a variety of preselected analogue signals.

9. An input-output device as claimed in claim 8 wherein:

(a) said programmable memory (8) is controlled by said microprocessor (6) for storing data in said programmable memory and said data defines:

(i) each said field device (4) connected to said signal conditioning circuitry (18);

(ii) one of said channels as an input signal to said input-output device;

8

(iii) one of said channels is an output signal from said input-output device to said one of said field device for controlling said one said field device in response to said input signal;

(b) said first multiplexer means (12,14) selectively transmits said data stored in said programmable memory corresponding to each said input signals and said output signals on each one of said channels;

(c) said video RAM (20) is connected to said first multiplexer and in response to said selected data from said multiplexer sequentially generates a digital bit stream corresponding to said data representing each said input signal and output signal;

(d) said signal circuitry conditioning is activated by each said analogue signal for sequentially:

(i) sensing each said selected input signal from said field devices on said selected channel, and

(ii) providing each said selected output signal to said field devices for controlling said field devices on said selected channel,

for each signal selected by said first multiplexer means from said channels whereby said input-output device may be programmed so that different input signals are monitored and different output signals are provided by said signal conditioning circuitry means on each said channel by varying said data stored in said programmable memory means without changing said signal conditioning circuitry means;

(e) said device further includes:

(i) a programmable gain amplifier (22) coupled with said signal conditioning circuitry for amplifying said analogue signals sensed by said signal conditioning circuitry within a preselected range;

(ii) a digital to analogue converter (24) for converting a digital signal from said microprocessor to an analogue signal;

(iii) a comparator (26) for comparing said amplified analogue signal from said programmable gain amplifier with said analogue signal from said digital to analogue converter.

10. A device as claimed in claim 9 whereby said signals may be programmed as analogue signals or digital signals.

**Patentansprüche**

1. Eingangs-Ausgangs-Einrichtung (2) zum sequentiellen Erfassen von Eingangssignalen von Außeneinrichtungen (4) und Bereitstellen von Steuerausgangssignalen zum Steuern der Außeneinrichtungen auf einer Vielzahl von Kanälen, umfassend:

(a) einen Signalaufbereitungskreis (18), der an die Außeneinrichtungen angeschlossen ist;

(b) einen programmierbaren Speicher (8);

(c) einen Mikroprozessor (6), der das Speichern von und den Zugriff auf Daten in dem programmierbaren Speicher steuert;

(d) ein erstes Multiplexermittel (12, 14), das an den Mikroprozessor angeschlossen ist;

**dadurch gekennzeichnet,** daß:

(e) der programmierbare Speicher (8) die Eingangs-Ausgangs-Einrichtung durch Speichern von Daten konfiguriert, welche definieren:

(i) jede der Außeneinrichtungen, die an den Signalaufbereitungskreis angeschlossen ist;

(ii) einen der Kanäle zum Bereitstellen eines Eingangssignals zu dem Signalaufbereitungskreis von einer der Außeneinrichtungen;

(iii) einen der Kanäle zum Bereitstellen eines Ausgangssignals von der Eingangs-Ausgangs-Einrichtung (2) zu einer der Außeneinrichtungen zum Steuern der Außeneinrichtung in Antwort auf ein Eingangssignal;

(f) das erste Multiplexermittel in Antwort auf Steuersignale von dem Mikroprozessor die in dem programmierbaren Speicher gespeicherten Daten entsprechend dem Eingangssignal oder dem Ausgangssignal zu einem Bitreihengenerator (20) selektiv überträgt;

(g) der Bitreihengenerator (20) an das erste Multiplexermittel angeschlossen ist und in Antwort auf die ausgewählten Daten aus dem ersten Multiplexermittel eine ausgewählte Digitalbitreihe erzeugt, die den das Eingangssignal oder das Ausgangssignal darstellenden Daten entspricht;

(h) ein Mittel (30) vorgesehen ist, um die Digitalbitreihe in ein Analogsignal für ein sequentiell gewähltes Eingangssignal oder Ausgangssignal zu wandeln;

(i) der Signalaufbereitungskreis (18) durch das Analogsignal aktiviert wird, um das Eingangssignal zu erfassen oder das Ausgangssignal bereitzustellen,

9

(j) wobei die Eingangs-Ausgangs-Einrichtung durch Variieren der in dem programmierbaren Speicher gespeicherten Daten ohne Änderung des Signalaufbereitungskreises programmiert ist, so daß Eingangssignale von den Außeneinrichtungen auf verschiedenen Kanälen durch den Signalaufbereitungskreis überwacht werden können, oder Ausgangssignale zu den Außeneinrichtungen auf verschiedenen Kanälen durch den Signalaufbereitungskreis ausgegeben werden können.

2. Eingangs-Ausgangs-Einrichtung nach Anspruch 1, in der das Bitreihengeneratormittel ein Schieberegister zum Erzeugen der Digitalbitreihe zwischen 0 und 4096 Informationsbits mit einer vorbestimmten Frequenz für jedes gewählte Eingangssignal und Ausgangssignal aufweist.

3. Eingangs-Ausgangs-Einrichtung nach Anspruch 1, in der der Bitreihengenerator ein Video-RAM (20) zum Erzeugen der Digitalbitreihe für jedes gewählte Eingangssignal und Ausgangssignal aufweist.

4. Eingangs-Ausgangs-Einrichtung nach einem der vorhergehenden Ansprüche, in der das Signalaufbereitungskreismittel (18) 32 Kanäle umfaßt.

5. Eingangs-Ausgangs-Einrichtung nach Anspruch 3, in der das Video-RAM (20) eine Digitalbitreihe zwischen 0 und 4096 Informationsbits mit einer vorbestimmten Frequenz für jedes sequentiell gewählte Eingangssignal oder Ausgangssignal erzeugt.

6. Eingangs-Ausgangs-Einrichtung nach Anspruch 5, in der der programmierbare Speicher umfaßt:
   (a) in einem EPROM (8) fixierte Software zum Definieren der Eingangssignale oder der Ausgangssignale;
   (b) einen in dem Video-RAM-Mittel (2) enthaltenen Schreib-Lesepeicher zum Speichern der definierten Eingangssignale oder Ausgangssignale.

7. Eingangs-Ausgangs-Einrichtung nach Anspruch 5, in der der programmierbare Speicher umfaßt:
   (a) in einem EPROM (8) fixierte Software zum Definieren der Eingangssignale oder der Ausgangssignale;
   (b) einen Schreib-Lesespeicher zum Speichern der definierten Eingangssignale oder Ausgangssignale, wobei der Schreib-Lesespeicher von dem Video-RAM (20) getrennt ist.

8. Eingangs-Ausgangs-Einrichtung nach Anspruch 6 oder 7, in der die Wandlermittel einer Stromquelle (28) zugeordnete Spannungsschieber (30) zum Erzeugen einer Vielzahl vorbestimmter Analogsignale umfassen.

9. Eingangs-Ausgangs-Einrichtung nach Anspruch 8, in der:
   (a) der programmierbare Speicher (8) durch den Mikroprozessor (6) zur Datenspeicherung in dem programmierbaren Speicher gesteuert ist, und die Daten definieren:
      (i) jede der Außeneinrichtungen (4), die an den Signalaufbereitungskreis (18) angeschlossen sind;
      (ii) einen der Kanäle als ein Eingangssignal an die Eingangs-Ausgangs-Einrichtung;
      (iii) einen der Kanäle als ein Ausgangssignal von der Eingangs-Ausgangs-Einrichtung zu der einen der Außeneinrichtungen zum Steuern der einen Außeneinrichtung in Antwort auf das Eingangssignal;
   (b) das erste Multiplexermittel (12, 14) die in dem programmierbaren Speicher entsprechend jedem der Eingangssignale und der Ausgangssignale gespeicherten Daten zu jedem der einzelnen Kanäle selektiv überträgt;
   (c) das Video-RAM (20) an den ersten Multiplexer angeschlossen ist und in Antwort auf die gewählten Daten aus dem Multiplexer eine Digitalbitreihe sequentiell erzeugt, die den jedes Eingangssignal und Ausgangssignal darstellenden Daten entspricht;
   (d) der Signalaufbereitungskreis durch jedes Analogsignal aktiviert wird, um sequentiell:
      (i) jedes gewählte Eingangssignal von den Außeneinrichtungen auf dem gewählten Kanal zu erfassen und
      (ii) jedes gewählte Ausgangssignal an die Außeneinrichtungen zum Steuern der Außeneinrichtungen auf dem gewählten Kanal auszugeben,
   für jedes Signal, das durch das erste Multiplexermittel von den Kanälen ausgewählt ist, wobei die Eingangs-Ausgangs-Einrichtung derart programmiert werden kann, daß verschiedene Eingangssignale überwacht und verschiedene Ausgangssignale von dem Signalaufbereitungskreismittel auf jedem Kanal bereitgestellt werden, um die in dem programmierbaren Speichermittel gespeicherten Daten zu variieren, ohne das Signalaufbereitungskreismittel zu ändern;

(e) welche Einrichtung weiter umfaßt:

(i) einen Verstärker (22) programmierbarer Verstärkung, der mit dem Signalaufbereitungskreis verbunden ist, um die von dem Signalaufbereitungskreis erfaßten Analogsignale innerhalb eines vorbestimmten Bereichs zu verstärken;

(ii) einen Digital-Analogwandler (24) zum Wandeln eines Digitalsignals von dem Mikroprozessor in ein Analogsignal;

(iii) einen Komparator (26) zum Vergleichen des von dem Verstärker programmierbarer Verstärkung verstärkten Analogsignals mit dem Analogsignal von dem Digital-Analogwandler.

**10.** Einrichtung nach Anspruch 9, in der die Signale als Analogsignale oder Digitalsignale programmiert werden können.

## Revendications

**1.** Dispositif (2) d'entrée-sortie pour détecter séquentiellement des signaux d'entrée en provenance de dispositifs à l'essai (4) et délivrant des signaux de sortie de commande pour la commande desdits dispositifs à l'essai sur une pluralité de canaux, comprenant:

(a) un circuit (18) de conditionnement de signaux connecté auxdits dispositifs à l'essai;

(b) une mémoire programmable (8);

(c) un microprocesseur (6) pour la commande du stockage et de l'accès des données dans ladite mémoire programmable;

(d) des premiers moyens (12, 14) formant multiplexeur connectés audit microprocesseur;

caractérisé en ce que:

(e) ladite mémoire programmable (8) configure ledit dispositif d'entrée-sortie en stockant des données définissant:

(i) chacun desdits dispositifs à l'essai connecté audit circuit (18) de conditionnement de signaux;

(ii) l'un desdits canaux comme fournissant un signal d'entrée audit circuit de conditionnement de signaux à partir de l'un desdits dispositifs à l'essai;

(iii) l'un desdits canaux comme fournissant un signal de sortie à partir dudit dispositif d'entrée-sortie (2) à l'un desdits dispositifs à l'essai pour la commande dudit dispositif à l'essai en réponse à un signal d'entrée;

(f) lesdits premiers moyens formant multiplexeur, en réponse auxdits signaux de commande en provenance dudit microprocesseur, transmettent sélectivement lesdites données stockées dans ladite mémoire programmable correspondant audit signal d'entrée ou audit signal de sortie à un générateur (20) de flux de bits;

(g) ledit générateur (20) de flux de bits est connecté auxdits premiers moyens formant multiplexeur et en réponse auxdites données sélectionnées en provenance desdits premiers moyens formant multiplexeur génère un flux de bits numérique sélectionné correspondant auxdites données représentant ledit signal d'entrée ou ledit signal de sortie;

(h) un moyen (30) est prévu pour transformer ledit flux de bits numérique en un signal analogique pour un signal d'entrée ou un signal de sortie sélectionné séquentiellement;

(i) ledit circuit (18) de conditionnement de signaux est actionné par ledit signal analogique pour détecter ledit signal d'entrée ou pour fournir ledit signal de sortie,

(j) ledit dispositif d'entrée-sortie étant programmé en faisant varier les données stockées dans ladite mémoire programmable sans modifier ledit circuit de conditionnement de signaux de telle sorte que les signaux d'entrée en provenance desdits dispositifs à l'essai sur différents canaux peuvent être contrôlés par ledit circuit de conditionnement de signaux, ou que les signaux de sortie desdits dispositifs à l'essai peuvent être fournis sur différents canaux par ledit circuit de conditionnement.

**2.** Dispositif d'entrée-sortie selon la revendication 1 dans lequel ledit moyen formant générateur de flux de bits comporte un registre à décalage pour générer ledit flux de bits numérique entre zéro et 4096 bits d'information à une fréquence présélectionnée pour chaque signal d'entrée et signal de sortie sélectionné .

**3.** Dispositif d'entrée-sortie selon la revendication 1 dans lequel ledit générateur de flux de bits comporte une RAM vidéo (20) pour générer ledit flux de bits numérique pour chaque signal d'entrée et signal de sortie sélectionné.

4. Dispositif d'entrée-sortie selon l'une quelconque des revendications précédentes dans lequel ledit moyen (18) formant circuit de conditionnement de signaux comporte 32 canaux.

5. Dispositif d'entrée-sortie selon la revendication 3 dans lequel ladite RAM vidéo (20) génère un flux de bits numérique entre zéro et 4096 bits d'information à une fréquence présélectionnée pour chaque signal d'entrée ou signal de sortie sélectionné séquentiellement.

6. Dispositif d'entrée-sortie selon la revendication 5 dans lequel ladite mémoire programmable comporte:
(a) un logiciel fixe dans l'EPROM (8) pour définir lesdits signaux d'entrée ou lesdits signaux de sortie;
(b) une mémoire à accès sélectif incluse dans ledit moyen (20) à RAM vidéo pour stocker lesdits signaux d'entrée ou signaux de sortie définis.

7. Dispositif d'entrée-sortie selon la revendication 5 dans lequel ladite mémoire programmable comporte:
(a) un logiciel fixe dans l'EPROM (8) pour définir lesdits signaux d'entrée ou lesdits signaux de sortie;
(b) une mémoire à accès sélectif pour stocker lesdits signaux d'entrée ou signaux de sortie définis ladite mémoire à accès sélectif étant séparée de ladite RAM vidéo (20).

8. Dispositif d'entrée-sortie selon la revendication 6 ou 7 dans lequel ledit moyen de transformation comporte des dispositifs (30) de décalage de tension associés à une source d'alimentation (28) pour générer une variété de signaux analogiques présélectionnés.

9. Dispositif d'entrée-sortie selon la revendication 8 dans lequel:
(a) ladite mémoire programmable (8) est commandée par ledit microprocesseur (6) pour stocker des données dans ladite mémoire programmable et lesdites données définissent:
(i) chaque dispositif à l'essai (4) connecté audit circuit (18) de conditionnement de signaux;
(ii) l'un desdits canaux comme un signal d'entrée pour le dispositif d'entrée-sortie;
(iii) l'un desdits canaux est un signal de sortie en provenance du dispositif d'entrée-sortie appliqué à l'un desdits dispositifs à l'essai pour la commande de l'un desdits dispositifs à l'essai en réponse audit signal d'entrée;
(b) lesdits premiers moyens (12, 14) formant multiplexeur transmettent sélectivement lesdites données stockées dans ladite mémoire programmable correspondant à chacun desdits signaux d'entrée et desdits signaux de sortie sur chacun desdits canaux;
(c) ladite RAM vidéo (20) est connectée audit premier multiplexeur et en réponse auxdites données sélectionnées en provenance dudit multiplexeur génère séquentiellement un flux de bits numérique correspondant auxdites données représentant chacun desdits signaux d'entrée et desdits signaux de sortie;
(d) ledit circuit de conditionnement de signaux est actionné par chacun desdits signaux analogiques pour séquentiellement:
(i) détecter chacun desdits signaux d'entrée sélectionnés en provenance desdits dispositifs à l'essai sur ledit canal sélectionné, et
(ii) fournir chacun desdits signaux de sortie sélectionnés auxdits dispositifs à l'essai pour la commande desdits dispositifs à l'essai sur ledit canal sélectionné,
pour chaque signal sélectionné par ledit premier moyen multiplexeur en provenance desdits canaux, ledit dispositif d'entrée-sortie pouvant être programmé de telle sorte que des signaux d'entrée différents sont contrôlés et différents signaux de sortie sont fournis par chacun desdits moyens à circuit de conditionnement de signaux sur chacun desdits canaux en faisant varier lesdites données stockées dans ledit moyen à mémoire programmable sans modifier ledit moyen à circuit de conditionnement de signaux;
(e) ledit dispositif comporte en outre:
(i) un amplificateur (22) à gain programmable couplé avec ledit circuit de conditionnement de signaux pour amplifier lesdits signaux analogiques détectés par ledit circuit de conditionnement de signaux dans une plage présélectionnée;
(ii) un convertisseur numérique-analogique (24) pour convertir un signal numérique en provenance du microprocesseur en un signal analogique;

12

(iii) un comparateur (26) pour comparer ledit signal analogique amplifié en provenance dudit amplificateur à gain programmable avec ledit signal analogique en provenance dudit convertisseur numérique-analogique.

**10.** Dispositif selon la revendication 9 dans lequel lesdits signaux peuvent être programmés comme des signaux analogiques ou des signaux numériques.

FIGURE 1

EP 0 301 736 B1

FIGURE 2

Figure 3

16

52

54

i

50

56

FIGURE 4

62

64

FIGURE 5

70

72

74

FIGURE 6

10
ON

4086 OFF

FIGURE 7